# EUROPEAN PATENT APPLICATION

(11) **EP 4 598 174 A1**
(43) Date of publication of application: **06.08.2025**
(21) Application number: 22959766.1
(22) Date of filing: 26.09.2022
(51) Int. Cl.: H04W 72/04, H04B 7/04

(54) **PUSCH TRANSMISSION METHOD AND APPARATUS, MEDIUM, AND PRODUCT**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/121479
(87) International publication number: WO 2024/065114

(57) **Abstract**

Disclosed are a physical uplink shared channel (PUSCH) transmission method and apparatus, a medium, and a product, relating to the field of communications. The method comprises: separately transmitting, on a same time frequency resource in a same slot from different panels by means of a same data layer or a data layer set, one transport block (TB) carried by a PUSCH, wherein the TB is transmitted by means of simultaneous transmission via multi-panel from multiple panels to multiple transmission and reception points (TRPs), and data layers/data layer sets transmitted by different panels are associated with a demodulation reference signal (DMRS) port/port group. The PUSCH transmission method provided by the present invention is used for supporting uplink multi-panel simultaneous transmission.

## Description

### TECHNICAL FIELD

The present disclosure relates to the field of communications, and in particular to a Physical Uplink Shared Channel (PUSCH) transmission method and apparatus, a medium and a product.

### BACKGROUND

In order to ensure reliability and throughput of transmission, in related art, it provides Simultaneous Transmission via Multi-Panels (STxMP) to Transmission and Reception Points (TRPs) of multiple base stations through multiple panels on a terminal.

In the related art, transmission to the TRP direction of multiple base stations is performed through the physical uplink shared channel (PUSCH). In R17, it mainly standardizes coordinated transmission in a Time Division Multiplexing (TDM) transmission mode, where repetition of the same information on the PUSCH is transmitted to different TRPs of the base station through different Transmission Occasions (TOs) in the time domain in a time division manner. However, this method has a large transmission delay.

Therefore, how to implement other transmission multiplexing methods is a problem that needs to be solved.

### SUMMARY

The embodiments of the present disclosure provide a PUSCH transmission method and apparatus, a medium and a product, which can realize PUSCH transmission in a multi-panel simultaneous transmission scenario. The technical solution is as follows.

According to an aspect of the embodiments of the present disclosure, a PUSCH transmission method is provided, the method being performed by a terminal, and the method including:
transmitting, respectively from different antenna panels through the same data layer or data layer set on the same time-frequency resource in the same slot, a transport block (TB) carried by the PUSCH, where the TB is transmitted in a simultaneous transmission via multi-panel mode from multiple antenna panels to multiple Transmission and Reception Points (TRPs);
where transmission of the data layer/data layer set by the different antenna panels is associated with a demodulation reference signal (DMRS) port/port group.

According to another aspect of the embodiments of the present disclosure, a PUSCH transmission method is provided, the method being performed by a network device, and the method including:
receiving a transport block (TB) carried by the PUSCH transmitted respectively from different antenna panels through the same data layer or data layer set on the same time-frequency resource in the same slot, where the TB is transmitted in a simultaneous transmission via multi-panel mode from multiple antenna panels to multiple Transmission and Reception Points (TRPs);
where transmission of the data layer/data layer set by the different antenna panels is associated with a demodulation reference signal (DMRS) port/port group.

According to another aspect of the embodiments of the present disclosure, a PUSCH transmission apparatus is provided, the apparatus including:
a transmission module, configured to transmit, respectively from different antenna panels through the same data layer or data layer set on the same time-frequency resource in the same slot, a transport block (TB) carried by the PUSCH, where the TB is transmitted in a simultaneous transmission via multi-panel mode from multiple antenna panels to multiple Transmission and Reception Points (TRPs);
where transmission of the data layer/data layer set by the different antenna panels is associated with a demodulation reference signal (DMRS) port/port group.

According to another aspect of the embodiments of the present disclosure, a PUSCH transmission apparatus is provided, the apparatus including:
a receiving module, configured to receive a transport block (TB) carried by the PUSCH transmitted respectively from different antenna panels through the same data layer or data layer set on the same time-frequency resource in the same slot, where the TB is transmitted in a simultaneous transmission via multi-panel mode from multiple antenna panels to multiple Transmission and Reception Points (TRPs);
where transmission of the data layer/data layer set by the different antenna panels is associated with a demodulation reference signal (DMRS) port/port group.

According to another aspect of the embodiments of the present disclosure, a terminal is provided, the terminal including:
a processor; and
a transceiver coupled to the processor;
where the processor is configured to load and execute executable instructions to implement the PUSCH transmission method in the above aspects.

According to another aspect of the embodiments of the present disclosure, a network device is provided, the network device including:
a processor; and
a transceiver coupled to the processor;
where the processor is configured to load and execute executable instructions to implement the PUSCH transmission method in the above aspects.

According to another aspect of the embodiments of the present disclosure, a chip is provided, the chip including a programmable logic circuit and/or program instructions, where the chip, when running, is configured to implement the PUSCH transmission method as described in the above aspects.

According to another aspect of the embodiments of the present disclosure, a computer-readable storage medium is provided, in which at least one instruction or at least one segment of program, code set or instruction set is stored, and the at least one instruction or the at least one segment of program, code set or instruction set is loaded and executed by a processor to implement the PUSCH transmission method as described in the above aspects.

According to another aspect of the embodiments of the present disclosure, a computer program product (or computer program) is provided, which includes computer instructions, and the computer instructions are stored in a computer-readable storage medium; a processor of a computer device reads the computer instructions from the computer-readable storage medium, and the processor executes the computer instructions to cause the computer device to perform the PUSCH transmission method as described in the above aspects.

The technical solutions provided by the embodiments of the present disclosure can have the following beneficial effects.

The simultaneous uplink transmission through multiple panels/multiple transmission and reception points is employed to support higher uplink throughput and more reliable transmission performance, providing the terminal with a possible Single-Frequency (SFN) transmission scheme to support simultaneous transmission via multiple panels.

### BRIEF DESCRIPTION OF THE DRAWINGS

In order to more clearly illustrate the technical solutions in the embodiments of the present disclosure, the drawings used in the description of the embodiments will be briefly introduced below. Obviously, the drawings described below are only some of the embodiments of the present disclosure, and other drawings can be obtained by those of ordinary skill in the art based on these drawings without creative effort.
FIG. 1 is a schematic diagram of a communication system provided according to an illustrative embodiment;
FIG. 2 is a schematic diagram of a communication system provided according to an illustrative embodiment;
FIG. 3 is a schematic diagram of an uplink transmission process provided according to an illustrative embodiment;
FIG. 4 is a schematic diagram of an uplink transmission process provided according to an illustrative embodiment;
FIG. 5 is a schematic diagram of a transmission scheme provided according to an illustrative embodiment;
FIG. 6 is a flowchart of a PUSCH transmission method provided according to an illustrative embodiment;
FIG. 7 is a flowchart of a PUSCH transmission method provided according to an illustrative embodiment;
FIG. 8 is a block diagram of a PUSCH transmission apparatus provided according to an illustrative embodiment;
FIG. 9 is a block diagram of a PUSCH transmission apparatus provided according to an illustrative embodiment;
FIG. 10 is a schematic diagram of structure of a terminal according to an illustrative embodiment; and
FIG. 11 is a schematic diagram of structure of a network device according to an illustrative embodiment.

### DETAILED DESCRIPTION

Here, illustrative embodiments will be described in detail, examples of which are shown in the accompanying drawings. When the following description refers to the drawings, the same numbers in different drawings represent the same or similar elements unless otherwise indicated. The implementations described in the following illustrative embodiments do not represent all implementations consistent with the present disclosure. Instead, they are merely examples of apparatus and methods consistent with some of the aspects of the present disclosure as detailed in the attached claims. In the description of the present disclosure, unless otherwise specified, "/" means or, for example, A/B can mean A or B; "and/or" here only describes an association relationship of the associated objects, indicating that there can be three relationships. For example, A and/or B may represent three situations: A exists alone, A and B exist at the same time, and B exists alone.

The terms used in the present disclosure are only for the purpose of describing specific embodiments, and are not intended to limit the present disclosure. The singular forms of "a", "said" and "the" used in the present disclosure and the appended claims are also intended to include plural forms, unless the context clearly indicates otherwise. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "in a case where" or "when" or "in response to determining".

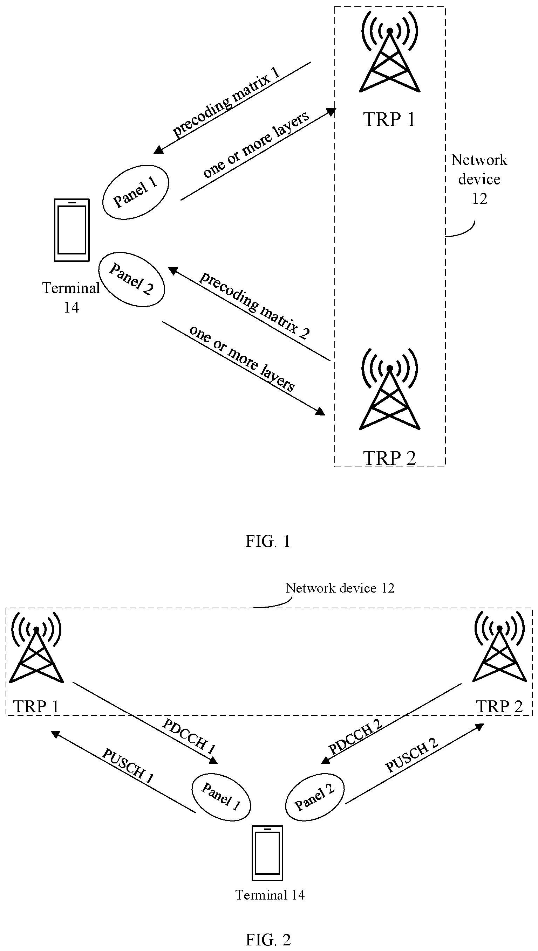

FIG. 1 is a schematic diagram showing a communication system provided by an illustrative embodiment of the present disclosure. The communication system may include a network device 12 and a terminal 14. The network device 12 includes TRP1 and TRP2.

The network device 12 may be a base station, which is a device that provides radio communication functions for the terminal 14. The base station may include various forms of macro base stations, micro base stations, relay stations, access points, etc. In a systems using different radio access technologies, the names of devices with base station functions may be different, for example, in the Long Term Evolution (LTE) system, it is called an evolved base station (eNodeB, eNB); in the 5G NR system, it is called a next-generation base station (gNodeB, gNB). With the evolution of communication technology, the description of "base station" may change. For the convenience of description in the embodiments of the present disclosure, the above devices that provide radio communication functions for the terminal 14 are collectively referred to as the network device 12.

The terminal 14 may include various handheld devices with radio communication functions, vehicle-mounted devices, wearable devices, computing devices or other processing devices connected to a wireless modem, as well as various forms of user equipment, mobile stations (MS), terminal devices, etc. For the convenience of description, the above devices are collectively referred to as a terminal.

In some examples, there are two communication scenarios between the network device 12 and the terminal 14: an uplink communication scenario and a downlink communication scenario. The uplink communication refers to that the terminal 14 sends a signal to the network device 12, and the downlink communication refers to that the network device 12 sends a signal to the terminal 14.

The uplink transmission of the physical uplink shared channel (PUSCH) is transmitted to directions of the transmission and reception points (TRPs) of multiple base stations. The third generation partnership project (3GPP) release R17 mainly standardizes the coordinated transmission in the time division multiplexing (TDM) transmission mode, where repetition of the same information on the PUSCH is sent to different TRPs of the base station through different Transmission Occasions (TOs) in the time domain in a time division manner. This method has relatively low requirements on the terminal capabilities, does not require the capability to support simultaneous transmission beams, and has a large transmission delay.

For the uplink, spatial characteristics of channels that the PUSCH channels for different TRPs actually experience may vary greatly. Therefore, it is considered that spatial reception parameters of PUSCH channels in different transmission directions are different.

In the enhanced goal of R18, it mainly aims to increase the reliability and throughput of the transmission by implementing simultaneous cooperative transmission to multiple TRP directions through multiple panels of the terminal, while effectively reduce the transmission delay under multiple TRPs, but the terminal is required to have the capability to send multiple beams simultaneously. The PUSCH transmission can be based on multiple panel to multiple TRP transmission scheduled by a single Physical Downlink Control Channel (PDCCH), that is, Single Downlink Control Information (S-DCI).

As shown in FIG. 1, one Downlink Control Information (DCI) directly or indirectly schedules precoding matrix 1 and precoding matrix 2 to the terminal. The terminal 14 sends one or more layers of uplink data to TRP1 based on precoding matrix 1 using panel 1. The terminal 14 sends one or more layers of uplink data to TRP2 based on precoding matrix 2 using panel 2.

The PUSCH transmission can also be based on multiple panel to multiple TRP transmission scheduled by different PDCCHs, that is, Multi-Downlink Control Information (M-DCI), as shown in FIG. 2.

TRP 1 sends the first DCI to the terminal 14 through PDCCH 1 to schedule the terminal 14 to send PUSCH 1 to TRP 1 using panel 1; TRP 2 sends the second DCI to the terminal 14 through PDCCH 2 to schedule the terminal 14 to send PUSCH 2 to TRP 2 using panel 2.

The above TRP 1 and TRP 2 can be two TRPs of the same cell, or two TRPs of different cells.

In the STxMP scenario, the uplink transmission process includes a codebook-based uplink transmission process and a non-codebook-based uplink transmission process.

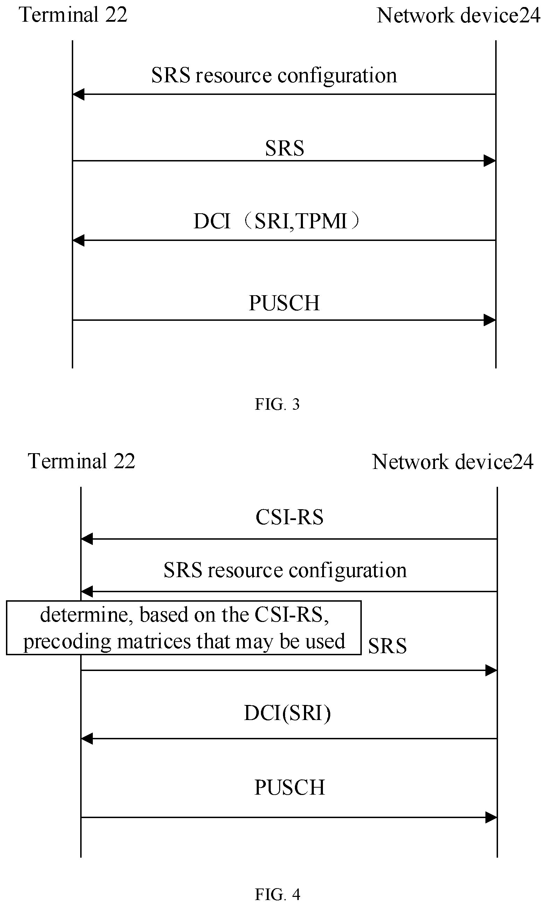

FIG. 3 is a schematic diagram showing a codebook-based uplink transmission process provided by an illustrative embodiment of the present disclosure, and the schematic diagram includes a terminal 22 and a network device 24.

In the codebook-based uplink transmission process, the network device 24 first sends an SRS resource configuration to the terminal 22, where the SRS resource configuration includes at least one SRS resource and a time-frequency resource position of each SRS resource. Then, the terminal 22 sends at least one SRS to the network device 24 based on the SRS resource configuration. The network device 24 obtains a channel condition of each uplink channel based on the at least one SRS received, and then provides a DCI to the terminal 22, where the DCI includes at least an SRS Resource Indication (SRI) and a Transmitted Precoding Matrix Indicator (TPMI). Finally, the terminal 22 sends a PUSCH to the network device 24 based on the SRI and TPMI.

FIG. 4 is a schematic diagram showing a non-codebook based uplink transmission process provided by an illustrative embodiment of the present disclosure, and the schematic diagram includes a terminal 22 and a network device 24.

In the non-codebook based uplink transmission process, the precoding matrix is no longer limited to a fixed candidate set. The network device 24 first sends a Channel State Information-Reference Signal (CSI-RS) and SRS resource configuration information to the terminal 22. The SRS resource configuration includes at least one SRS resource and a time-frequency resource position of each SRS resource. Then, the terminal 22 obtains at least one precoding matrix that may be used, by performing calculation based on the measurement result of the CSI-RS using an algorithm such as singular value decomposition, and then the terminal 22 sends at least one SRS to the network device 24 based on the SRS resource configuration. The network device 24 obtains a channel condition of each uplink channel based on the received at least one SRS, and then provides a DCI to the terminal 22, where the DCI includes at least a SRI. Finally, the terminal 22 determines, based on SRI, the precoding matrix used this time from the precoding matrices that may be used, and sends a PUSCH to the network device 24 based on SRI and the precoding matrix used this time.

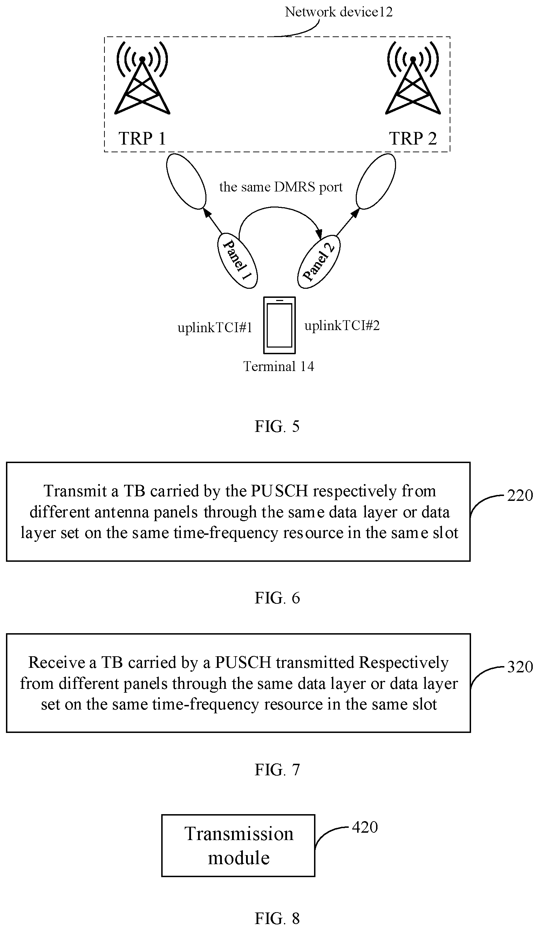

FIG. 5 is a schematic diagram showing a SFN transmission multiplexing mode provided by an illustrative embodiment of the present disclosure, and the schematic diagram includes a network device 12 and a terminal 14.

In the SFN transmission multiplexing mode, one TB of the PUSCH is sent on the same time-frequency resource to two different TRPs through the same DMRS port or port combination allocated on different panels, where the different panels/TRPs/TOs are respectively associated with different TCI states (i.e., beams).

The terminal 14 uses the SFN transmission mode, that is, sends the TB to multiple TRPs of the network device 12 simultaneously, thereby increasing the probability of receiving data by the network device 12, so as to achieve reliable uplink transmission.

In the SFN transmission mode, two uplink waveforms of Cyclic Prefix-Orthogonal Frequency Division Multiplexing (CP-OFDM) and Discrete Fourier Transform-Spread-Orthogonal Frequency Division Multiplexing (DFT-S-OFDM) can be both supported.

The CP-OFDM waveform is used for the uplink and downlink of the physical layer in the NR system, is suitable for high-throughput scenarios and adopts a Multiple Input Multiple Output (MIMO) transmission mode, provides a high spectral packing efficiency in a Resource Block (RB), and can maximize network capacity utilization in dense urban areas. The DFT-S-OFDM waveform is used for the uplink of the physical layer in the NR system, is suitable for power-constrained scenario, and adopts a transmission mode of single-layer transmission. Since a Peak to Average Power Ratio (PAPR) of the DFT-S-OFDM waveform is lower than that of the CP-OFDM waveform, it is more conducive to cell coverage and more suitable for cell edge user transmission.

The explanation of the relevant terms involved in the present disclosure are provided below.

### Multi-TRP transmission:

In order to improve the coverage at the cell edge and provide more balanced service quality within the service area, multi-point coordination is still an important technical means in the NR system. From the perspective of network form, network deployment with a large number of distributed access points plus baseband centralized processing will be more conducive to providing a balanced user experience rate and significantly reduce the delay and signaling overhead caused by handover cross cells. As the frequency band rises, relatively dense deployment of access points is also required to ensure network coverage. In the high frequency band, as an integration degree of the active antenna device increases, it will be more inclined to use modular active antenna arrays. The antenna array of each TRP can be divided into several antenna panels that are relatively independent of each other, so the form and number of ports of the entire array can be flexibly adjusted according to the deployment scenarios and service requirements. The antenna panels or TRPs can also be connected by an optical fiber for more flexible distributed deployment. In the millimeter wave band, as the wavelength decreases, the blocking effect caused by obstacles such as human bodies or vehicles will become more significant. In this case, from the perspective of ensuring the robustness of the link connection, it is also possible to utilize the coordination between multiple TRPs or antenna panels to perform transmission/reception from multiple beams at multiple angles, thereby reducing the adverse effects of the blocking effect.

According to a mapping relationship between the transmitted signal streams and multiple TRPs/panels, Coordinated Multiple Point transmission technology can be divided into coherent transmission and incoherent transmission. In the coherent transmission, each data layer is mapped to multiple TRPs/antenna panels through a weighted vector. In the incoherent transmission, each data stream is mapped to only part of the TRPs/antenna panels. The coherent transmission has higher requirements for the synchronization between the transmission points and the transmission capacity of the backhaul link, and is therefore more sensitive to many non-ideal factors in real deployment conditions. The incoherent transmission is relatively less affected by the above factors, so it is a key option for multi-point transmission technology.

It should be noted that the research and standardization work on Multi-TRP (M-TRP) was not fully carried out in NR R15. R16 mainly focuses on the standardization of the Physical Downlink Shared Channel (PDSCH). R17 enhances the standardization of MTRP for the PUSCH/Physical Uplink Control Channel (PUCCH), but only standardizes the Time Division Multiplexing (TDM) transmission scheme. Currently, R18 considers simultaneous transmission enhancement of the MTRP based on multi-panel terminal for the PUSCH/PUCCH.

### Quasi Co-Location (QCL):

Quasi co-location (QCL) means that the large-scale parameters of the channel experienced by the symbol on one antenna port can be inferred from the channel experienced by the symbols on another antenna port. The large-scale parameters may include a delay spread, an average delay, a Doppler spread, a Doppler shift, an average gain, spatial reception parameters, and so on.

The concept of QCL was introduced with the emergence of Coordinated Multiple Point transmission (CoMP) technology. The multiple sites involved in the CoMP transmission process may correspond to multiple stations with different geographical locations or multiple sectors with different antenna panel orientations. For example, when a terminal receives data from different stations, the spatial differences between the stations will lead to differences in the large-scale channel parameters of the reception links from different stations, such as a Doppler frequency shift, delay spread, etc. The large-scale parameters of the channel will directly affect the adjustment and optimization of filter coefficients during channel estimation, and different channel estimation filter parameters should be used for signals sent from different stations to adapt to the corresponding channel propagation characteristics.

Therefore, although the differences in spatial position or angle of the stations are transparent to the UE and the CoMP operation itself, the impact of the above spatial differences on the large-scale parameters of the channel is an important factor that needs to be considered when the UE performs the channel estimation and reception detection. The so-called QCL of two antenna ports in the sense of certain large-scale parameters means that these large-scale parameters of the two ports are the same. In other words, as long as certain large-scale parameters of the two ports are identical, the terminal can assume that the two ports are transmitted from the same position (i.e., quasi-co-location) regardless of whether there are differences in their actual physical positions or corresponding antenna panel orientations.

In some typical application scenarios, considering the possible QCL relationship between various reference signals, from the perspective of simplifying signaling, in NR, several channel large-scale parameters are divided into the following four types to facilitate system configuration/indication according to different scenarios:
- QCL-Type A: {Doppler shift, Doppler spread, average delay, delay spread}.

The large-scale parameters other than the spatial reception parameters are the same.

The spatial reception parameters may not be required for the frequency bands below 6 GHz.
- QCL-Type B: {Doppler shift, Doppler spread}.

Only for frequency bands below 6GHz.
- QCL-Type C: {Doppler frequency shift, average delay}.
- QCL-TypeD (Type D): {spatial reception parameters}.

Mainly for frequency bands above 6GHz.

### DMRS:

A Demodulation Reference Signal (DMRS or DM-RS) is used for channel estimation and coherent demodulation of the physical channel.

The DMRS can be mapped to physical channels such as a PBCH, a PDCCH, a PDSCH, a PUCCH and a PUSCH. The DMRS in the PUSCH channel is mainly described in the embodiments of the present disclosure.

The DMRS is a UE-specific reference signal. The configuration information of DMRS mainly consists of three parts:
1. a DMRS mapping type: the mapping type determines a symbol starting position of the DMRS in the time domain.
2. a DMRS configuration type: the DMRS type is sometimes also called a DMRS configuration type, which determines a Resource Element (RE) mapping density of DMRS in the frequency domain.
3. a DMRS additional position: the DMRS signals can be divided into front loaded DMRS and post-loaded DMRS according to their positions. The post-loaded DMRS is the additional position mentioned here. The front loaded DMRS must exist, and the additional DMRS may be not configured. The additional DMRS is generally used in medium and high-speed mobile scenarios. By inserting more DMRS pilot symbols in the scheduled slot, the estimation accuracy of the time-varying channel is improved. Optionally, up to 3 additional positions can be configured in one slot.

FIG. 6 is a flow chart showing a PUSCH transmission method provided by an illustrative embodiment of the present disclosure, the method is applied to a terminal of the communication system shown in FIG. 1, and the method includes:

**Step 220: transmitting, respectively from different antenna panels through the same data layer or data layer set on the same time-frequency resource** in **the same slot, a TB carried by the PUSCH.**

In some examples, the TB is transmitted in an uplink simultaneous transmission via multi-panel mode from multiple antenna panels to multiple TRPs.

In some examples, the simultaneous transmission via multi-panel mode is a STxMP transmission mode.

In some examples, transmitting the data layer/data layer set by the different antenna panels is associated with a DMRS port/port group. In some embodiments, the data layer/data layer set is associated with the same group of DMRS port/port group; and in some embodiments, the data layer/data layer set is associated with different groups of DMRS port/port group.

In some examples, the TBs transmitted from different antenna panels are all transmitted through the same data layer or data layer set, that is, the transmission of the data part is the same.

In some examples, the terminal sends SRS resources to multiple TRPs, and the SRS resources are transmitted in a non-SFN mode.

The non-SFN mode is to send a panel-specific SRS based on each panel in the multiple panels; or to send a TRP-specific SRS based on each TRP in the multiple TRPs. That is, the panel-specific SRS is a SRS associated with each panel, and the TRP-specific SRS is the SRS associated with each TRP.

That is, the SRS is sent before the PUSCH is sent; and considering the differences between the channels from the panels to the TRPs, the SRS is sent in the non-SFN mode to perform sensing on the different channels.

In some embodiments, the SRS resource sent by each of the panels comes from a different SRS resource set; and in some embodiments, the SRS resource sent by each of the panels comes from the same SRS resource set.

In some examples, the usage of different groups of SRS resources is codebook or non-codebook.

In some embodiments, the PUSCHs sent by the multiple panels of the terminal are respectively associated with the same group of DMRS ports/port groups; and in some embodiments, the PUSCH sent by each panel in the multiple panels is respectively associated with a group of DMRS ports/port groups.

In some examples, different DMRS ports/port groups are respectively configured with different quasi-co-site (QCL) assumptions/transmission configuration indications (TCIs); where each QCL assumption/TCI is associated with a panel/TRP/beam direction.

The introduction is provided below in two different situations of the DMRS ports/port groups.

**Method 1: PUSCHs sent by multiple panels are respectively associated with the same group of DMRS ports/port groups.**

In some examples, the PUSCHs sent by multiple panels are respectively associated with the same group of DMRS ports/port groups, that is, the same group of DMRS ports/port groups is used for sending.

In some examples, the PUSCH is transmitted in a SFN mode; and the DMRS is transmitted in the SFN mode.

That is, the same group of DMRS ports/port groups is used, and both the PUSCH and the DMRS are transmitted in the SFN mode. In this mode, the DMRS signaling overhead can be reduced.

**Method 2: The PUSCH sent by each panel in the multiple panels is respectively associated with a group of DMRS ports/port groups.**

In some examples, the PUSCH sent by each panel in the multiple panels is associated with a group of DMRS ports/port groups, that is, different groups of DMRS ports/port groups are used for sending, and the number of DMRS ports contained in different groups of DMRS ports/port groups is the same.

In some examples, each DMRS port/port group contains the same number of DMRS ports, that is, the PUSCH sent by each panel in the multiple panels of the terminal corresponds to a different DMRS port/port group, but the number of DMRS ports contained in the different DMRS ports/port groups is the same.

In some examples, the PUSCH is transmitted in the SFN mode; and the DMRS is transmitted in a non-SFN mode.

The non-SFN mode includes at least one of the following: sending a panel-specific DMRS based on each panel in the multiple panels; or sending a TRP-specific DMRS based on each TRP in the multiple TRPs.

That is, each panel is respectively associated with a group of DMRS ports/port groups, and employing the independent DMRSs in different panel directions makes estimation on the different channels more accurate, but at the same time, the DMRS signaling overhead is also increased.

It should be noted that each of the methods involved in the present disclosure can be implemented as a separate embodiment. In some embodiments, the PUSCHs sent by the multiple panels are respectively associated with the same group of DMRS ports/port groups; in some embodiments, the PUSCH sent by each panel in the multiple panels is respectively associated with a group of DMRS ports/port groups.

To summarize, the method provided in this embodiment realizes the SFN transmission scheme of the multi-panel terminal in the multi-TRP mode by sending the TB from different panels through the same data layer or data layer set on the same time-frequency resources in the same slot, and in addition, provides an SRS enhancement scheme.

FIG. 7 is a flow chart showing a PUSCH transmission method provided by an illustrative embodiment of the present disclosure. This embodiment is illustrated in an example in which the method is implemented by a network device. The method includes:

**Step 320: receiving a transport block (TB) carried by a PUSCH transmitted respectively from different panels through the same data layer or data layer set on the same time-frequency resource in the same slot.**

In some examples, the TB is transmitted in an uplink simultaneous transmission via multi-panel mode from multiple antenna panels to multiple TRPs.

In some examples, the simultaneous transmission via multi-panel mode is a STxMP transmission mode.

In some examples, transmitting the data layer/data layer set by the different antenna panels is associated with a DMRS port/port group. In some embodiments, the data layer/data layer set is associated with the same group of DMRS ports/port groups; in some embodiments, data layer/data layer set is associated with different groups of DMRS ports/port groups.

In some examples, the TBs transmitted from different antenna panels are all transmitted through the same data layer or data layer set, that is, the transmission of the data part is the same.

In some examples, the network device receives a SRS resource sent by the terminal, and the SRS resource is transmitted in a non-SFN mode.

The non-SFN method is to send a panel-specific SRS based on each panel in the multiple panels; or to send a TRP-specific SRS based on each TRP in the multiple TRPs. That is, the panel-specific SRS is a SRS associated with each of the panels; the TRP-specific SRS is a SRS associated with each of the TRPs.

That is, the SRSs are sent before the PUSCHs are sent; and considering the differences between the channels from the panels to the TRPs, the SRSs are sent in the non-SFN method so as to perform sensing on the different channels.

In some embodiments, the SRS resource sent by each panel comes from a different SRS resource set; in some embodiments, the SRS resource sent by each panel comes from the same SRS resource set.

In some examples, the usage of different groups of SRS resources is codebook or non-codebook.

In some embodiments, the PUSCHs sent by the multiple panels of the terminal are respectively associated with the same group of DMRS ports/port groups; in some embodiments, the PUSCH sent by each panel in the multiple panels is respectively associated with a group of DMRS ports/port groups.

In some examples, different DMRS ports/port groups are respectively configured with different quasi-co-site (QCL) assumptions/transmission configuration indications (TCIs); where each QCL assumption/TCI is associated with a panel/TRP/beam direction.

The introduction is provided below in two different situations of the DMRS ports/port groups.

**Method 1: PUSCHs sent by multiple panels are respectively associated with the same group of DMRS ports/port groups.**

In some examples, the PUSCHs sent by the multiple panels are respectively associated with the same group of DMRS ports/port group, that is, the same group of DMRS ports/port group is used for sending.

In some examples, the PUSCH is transmitted in the SFN mode; and the DMRS is transmitted in the SFN mode.

That is, the same group of DMRS ports/port groups is used, and both the PUSCH and the DMRS are transmitted in the SFN mode. In this mode, the DMRS signaling overhead can be reduced.

**Method 2: The PUSCH sent by each panel in the multiple panels is respectively associated with a group of DMRS ports/port groups.**

In some examples, the PUSCH sent by each panel in the multiple panels is associated with a group of DMRS ports/port groups, that is, different groups of DMRS ports/port groups are used for sending, and the number of DMRS ports contained in the different groups of DMRS ports/port groups is the same.

In some examples, each DMRS port/port group contains the same number of DMRS ports, that is, the PUSCH sent by each panel in the multiple panels of the terminal corresponds to a different DMRS port/port group, but the number of the DMRS ports contained in the different DMRS ports/port groups is the same.

In some examples, the PUSCH is transmitted in the SFN mode; and the DMRS is transmitted in the non-SFN mode.

The non-SFN modes includes at least one of the following: sending a panel-specific DMRS based on each panel in the multiple panels; or sending a TRP-specific DMRS based on each TRP in the multiple TRPs.

That is, each panel is respectively associated with a group of DMRS ports/port groups, and employing the independent DMRSs in different panel directions makes estimation on the different channels more accurate, but at the same time, the DMRS signaling overhead is also increased.

It should be noted that each method involved in the present disclosure can be implemented as a separate embodiment. In some embodiments, the PUSCHs sent by the multiple panels are respectively associated with the same group of DMRS ports/port groups; in some embodiments, the PUSCH sent by each panel in the multiple panels is respectively associated with a group of DMRS ports/port groups.

To summarize, the method provided in this embodiment realizes the SFN transmission scheme of the multi-panel terminals in the multi-TRP mode by receiving the TBs sent from different panels through the same data layer or data layer set on the same time-frequency resources in the same slot; and in addition, provides an SRS enhancement scheme.

FIG. 8 is a block diagram showing a PUSCH transmission apparatus provided by an illustrative embodiment of the present disclosure, and the apparatus includes:
a transmission module 420, configured to transmit, respectively from different panels through the same data layer or data layer set on the same time-frequency resource in the same slot, a transport block (TB) carried by the PUSCH, where the TB is transmitted in a simultaneous transmission via multi-panel mode from multiple panels to multiple transmission and reception points (TRPs);
where transmission of the data layer/data layer set by the different antenna panels is associated with a demodulation reference signal (DMRS) port/port group.

In a possible design of the embodiment, the transmission module 420 is configured to send sounding reference signal (SRS) resources to the multiple TRPs, and the SRS resources are transmitted in a non-single frequency network (non-SFN) mode.

In a possible design of the embodiment, the non-SFN mode is to send a panel-specific SRS based on each panel in the multiple panels.

In a possible design of the embodiment, the SRS resource sent by each panel comes from a different SRS resource set; or, the SRS resource sent by each panel comes from the same SRS resource set.

In a possible design of the embodiment, the PUSCHs sent by the multiple panels are respectively associated with the same group of DMRS ports/port group.

In a possible design of this embodiment, the PUSCH is transmitted in a SFN mode; and the DMRS is transmitted in the SFN mode.

In a possible design of the embodiment, the PUSCH sent by each panel in the multiple panels is respectively associated with a group of DMRS ports/port groups.

In a possible design of the embodiment, each of the DMRS ports/port groups includes the same number of DMRS ports.

In a possible design of the embodiment, the PUSCH is transmitted in the SFN mode; and the DMRS is transmitted in a non-SFN mode.

In a possible design of the embodiment, the non-SFN method is to send a panel-specific DMRS based on each panel in the multiple panels.

In a possible design of the embodiment, the different DMRS ports/port groups are respectively configured with different quasi-co-site (QCL) assumptions/transmission configuration indications (TCIs); where each of the QCL assumptions/TCIs is associated with a panel/TRP/beam direction.

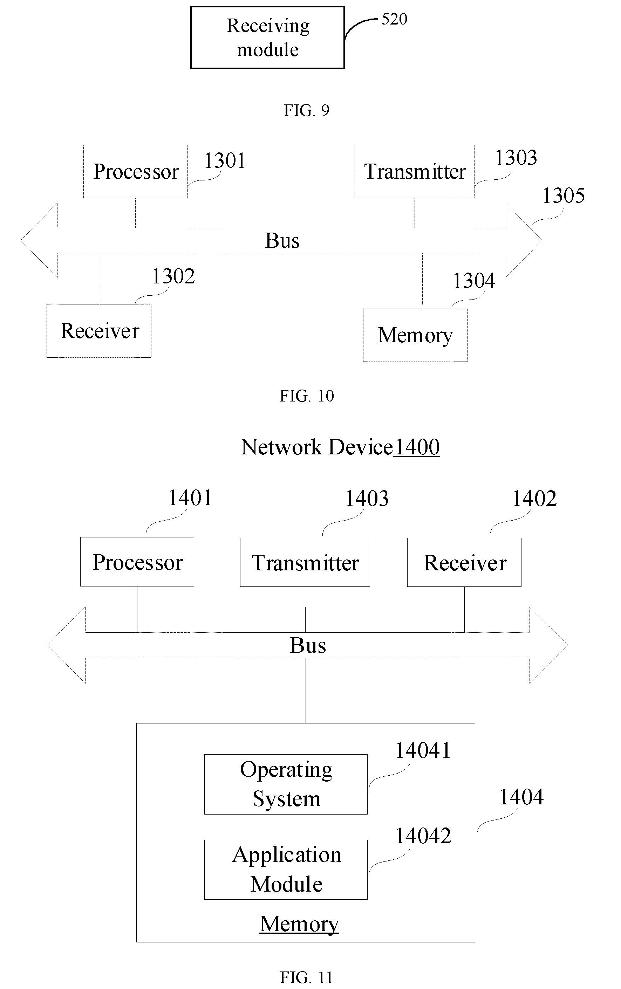

FIG. 9 is a block diagram showing a PUSCH transmission apparatus provided by an illustrative embodiment of the present disclosure, and the apparatus includes:
a receiving module 520, configured to receive a transport block (TB) carried by the PUSCH transmitted respectively from different panels through the same data layer or data layer set on the same time-frequency resource in the same slot, where the TB is transmitted in a simultaneous transmission via multi-panel mode from multiple panels to multiple transmission and reception points (TRPs);
where transmission of the data layer/data layer set by the different antenna panels is associated with a demodulation reference signal (DMRS) port/port group.

In a possible design of the embodiment, the receiving module 520 is configured to receive a sounding reference signal (SRS) resource, and the SRS resource is transmitted in a non-single frequency network (non-SFN) mode.

In a possible design of the embodiment, the non-SFN mode is to receive a panel-specific SRS based on each panel in the multiple panels.

In a possible design of the embodiment, the SRS resource sent by each panel comes from a different SRS resource set; or, the SRS resource sent by each panel comes from the same SRS resource set.

In a possible design of the embodiment, the PUSCHs sent by the multiple panels are respectively associated with the same group of DMRS ports/port group.

In a possible design of the embodiment, the PUSCH is transmitted in a SFN mode; and the DMRS is transmitted in the SFN mode.

In a possible design of the embodiment, the PUSCH sent by each panel in the multiple panels is respectively associated with a group of DMRS ports/port groups.

In a possible design of the embodiment, each of the DMRS ports/port groups includes the same number of DMRS ports.

In a possible design of the embodiment, the PUSCH is transmitted in an SFN mode; and the DMRS is transmitted in a non-SFN mode.

In a possible design of the embodiment, the non-SFN mode is to send a panel-specific DMRS based on each panel in the multiple panels.

In a possible design of the embodiment, the different DMRS ports/port groups are respectively configured with different quasi-co-site (QCL) assumptions/transmission configuration indications (TCIs); where each of the QCL assumptions/TCIs is associated with a panel/TRP/beam direction.

FIG. 10 is a schematic diagram showing a structure of a terminal provided by an illustrative embodiment of the present disclosure, and the terminal includes a processor 1301, a receiver 1302, a transmitter 1303, a memory 1304 and a bus 1305.

The processor 1301 includes one or more processing cores. The processor 1301 executes various functional applications and information processing by running software programs and modules.

The receiver 1302 and the transmitter 1303 may be implemented as one communication component, which may be a communication chip.

The memory 1304 is connected to the processor 1301 via the bus 1305.

The memory 1304 may be configured to store at least one instruction, and the processor 1301 may be configured to execute the at least one instruction to implement the steps in the above method embodiments.

In addition, the memory 1304 can be implemented by any type of volatile or non-volatile storage device or a combination thereof. The volatile or non-volatile storage device includes but is not limited to: a magnetic disk or an optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In an illustrative embodiment, a non-temporary computer-readable storage medium including instructions is also provided, such as a memory including instructions, and the instructions can be executed by a processor of a terminal to complete the above PUSCH transmission method. For example, the non-temporary computer-readable storage medium can be a ROM, a random access memory (RAM), a compact disc read-only memory (CD-ROM), a magnetic tape, a floppy disk, an optical data storage device, etc.

FIG. 11 is a block diagram showing a network device 1400 according to an illustrative embodiment. The network device 1400 may be a base station.

The network device 1400 may include a processor 1401, a receiver 1402, a transmitter 1403 and a memory 1404. The receiver 1402, the transmitter 1403 and the memory 1404 are respectively connected to the processor 1401 via a bus.

The processor 1401 includes one or more processing cores, and the processor 1401 executes the PUSCH transmission method provided by the embodiments of the present disclosure by running software programs and modules. The memory 1404 can be configured to store the software programs and modules. Specifically, the memory 1404 can store an operating system 14041 and an application module 14042 required for at least one function. The receiver 1402 is configured to receive communication data sent by other devices, and the transmitter 1403 is configured to send communication data to other devices.

An illustrative embodiment of the present disclosure also provides a computer-readable storage medium, which stores at least one instruction, at least one program, code set or instruction set, and the at least one instruction, at least one program, code set or instruction set is loaded and executed by a processor to implement the PUSCH transmission method provided by the various method embodiments described above.

An illustrative embodiment of the present disclosure also provides a computer program product, which includes computer instructions, and the computer instructions are stored in a computer-readable storage medium; a processor of a computer device reads the computer instructions from the computer-readable storage medium, and the processor executes the computer instructions, to cause the computer device to perform the PUSCH transmission method provided in the various method embodiments described above.

It should be understood that "multiple" mentioned herein refers to two or more. Those skilled in the art will easily think of other embodiments of the present disclosure after considering the specification and practicing the disclosure disclosed herein. The present disclosure is intended to cover any modification, use or adaptation of the present disclosure, which follows the general principles of the present disclosure and includes common knowledge or customary technical means in the art that are not disclosed in the present disclosure. The description and examples are regarded as illustrative only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A Physical Uplink Shared Channel (PUSCH) transmission method, performed by a terminal, the method comprising:
transmitting, respectively from different panels through the same data layer or data layer set on the same time-frequency resource in the same slot, a transport block (TB) carried by the PUSCH, wherein the TB is transmitted in a simultaneous transmission via multi-panel mode from multiple panels to multiple transmission and reception points (TRPs);
wherein transmission of the data layer/data layer set by the different panels is associated with a demodulation reference signal (DMRS) port/port group.

2. The method according to claim 1, wherein the method further comprises:
sending sounding reference signal (SRS) resources to the multiple TRPs, wherein the SRS resources are transmitted in a non-single frequency network (non-SFN) mode.

3. The method according to claim 2, wherein the non-SFN mode is to send a panel-specific SRS based on each panel in the multiple panels.

4. The method according to claim 3, wherein,
the SRS resources sent by each panel comes from a different SRS resource set; or
the SRS resource sent by each panel come from the same SRS resource set.

5. The method according to any one of claims 1 to 4, wherein:
the PUSCHs sent by the multiple panels are respectively associated with the same group of DMRS ports/port groups.

6. The method according to claim 5, wherein,
the PUSCHs are transmitted in a SFN mode; and
the DMRS is transmitted in the SFN mode.

7. The method according to any one of claims 1 to 4, wherein,
the PUSCH sent by each panel in the multiple panels is respectively associated with a group of DMRS ports/port groups.

8. The method according to claim 7, wherein,
each of the DMRS ports/port groups comprises the same number of DMRS ports.

9. The method according to claim 8, wherein
the PUSCH is transmitted in a SFN mode; and
the DMRS is transmitted in a non-SFN mode.

10. The method according to claim 9, wherein the non-SFN mode is to send a panel-specific DMRS based on each panel in the multiple panels.

11. The method according to any one of claims 5 to 10, wherein:
the different DMRS ports/port groups are respectively configured with different quasi co-location (QCL) assumptions/transmission configuration indications (TCIs); and
wherein each of the QCL assumptions/TCIs is associated with a panel/TRP/beam direction.

12. A Physical Uplink Shared Channel (PUSCH) transmission method, performed by a network device, the method comprising:
receiving a transport block (TB) carried by the PUSCH transmitted respectively from different panels through the same data layer or data layer set on the same time-frequency resource in the same slot, wherein the TB is transmitted in a simultaneous transmission via multi-panel mode from multiple panels to multiple transmission and reception points (TRPs);
wherein transmission of the data layer/data layer set by the different panels is associated with a demodulation reference signal (DMRS) port/port group.

13. The method according to claim 12, wherein the method further comprises:
receiving a sounding reference signal (SRS) resource, wherein the SRS resource is transmitted in a non-single frequency network (non-SFN) mode.

14. The method according to claim 13, wherein the non-SFN mode is to receive a panel-specific SRS based on each panel in the multiple panels.

15. The method according to claim 14, wherein,
the SRS resource sent by each panel comes from a different SRS resource set; or
the SRS resource sent by each panel comes from the same SRS resource set.

16. The method according to any one of claims 12 to 15, wherein:
the PUSCHs sent by the multiple panels are respectively associated with the same group of DMRS ports/port groups.

17. The method according to claim 16, wherein,
the PUSCHs are transmitted in a SFN mode; and
the DMRS is transmitted in the SFN mode.

18. The method according to any one of claims 12 to 15, wherein,
the PUSCH sent by each panel in the multiple panels is respectively associated with a group of DMRS ports/port groups.

19. The method according to claim 18, wherein,
each of the DMRS ports/port groups comprises the same number of DMRS ports.

20. The method according to claim 19, wherein,
the PUSCH is transmitted in a SFN mode; and
the DMRS is transmitted in a non-SFN mode.

21. The method according to claim 20, wherein the non-SFN mode is to send a panel-specific DMRS based on each panel in the multiple panels.

22. The method according to any one of claims 16 to 21, wherein:
the different DMRS ports/port groups are respectively configured with different quasi co-location (QCL) assumptions/transmission configuration indications (TCIs);
wherein each of the QCL assumptions/TCIs is associated with a panel/TRP/beam direction.

23. A Physical Uplink Shared Channel (PUSCH) transmission apparatus, the apparatus comprising:
a transmission module, configured to transmit, respectively from different antenna panels through the same data layer or data layer set on the same time-frequency resource in the same slot, a transport block (TB) carried by the PUSCH, wherein the TB is transmitted in a simultaneous transmission via multi-panel mode from multiple antenna panels to multiple transmission and reception points (TRPs);
wherein transmission of the data layer/data layer set by the different antenna panels is associated with a demodulation reference signal (DMRS) port/port group.

24. A Physical Uplink Shared Channel (PUSCH) transmission apparatus, the apparatus comprising:
a receiving module, configured to receive a transport block (TB) carried by the PUSCH transmitted respectively from different antenna panels through the same data layer or data layer set on the same time-frequency resources in the same slot, wherein the TB is transmitted in a simultaneous transmission via multi-panel mode from multiple panels to multiple transmission and reception points (TRPs);
wherein transmission of the data layer/data layer set by the different antenna panels is associated with a demodulation reference signal (DMRS) port/port group.

25. A terminal, the terminal comprising:
a processor; and
a transceiver connected to the processor;
wherein the processor is configured to load and execute executable instructions to implement the physical uplink shared channel (PUSCH) transmission method according to any one of claims 1 to 11.

26. A network device, the network device comprising:
a processor; and
a transceiver connected to the processor;
wherein the processor is configured to load and execute executable instructions to implement the physical uplink shared channel (PUSCH) transmission method according to any one of claims 12 to 22.

27. A chip, comprising a programmable logic circuit and/or program instructions, wherein the chip, when being running, is configured to implement the physical uplink shared channel (PUSCH) transmission method according to any one of claims 1 to 11, or the physical uplink shared channel (PUSCH) transmission method according to any one of claims 12 to 22.

28. A computer-readable storage medium, having stored therein at least one instruction, at least one program, a code set or an instruction set, wherein the at least one instruction, the at least one program, the code set or the instruction set is loaded and executed by a processor to implement the physical uplink shared channel (PUSCH) transmission method according to any one of claims 1 to 11, or the physical uplink shared channel (PUSCH) transmission method according to any one of claims 12 to 22.

29. A computer program product, wherein the computer program product comprises computer instructions which are stored in a computer-readable storage medium; a processor of a computer device reads the computer instructions from the computer-readable storage medium, and the processor executes the computer instructions, to cause the computer device to perform the physical uplink shared channel (PUSCH) transmission method according to any one of claims 1 to 11, or the physical uplink shared channel (PUSCH) transmission method according to any one of claims 12 to 22.
